# EUROPEAN PATENT SPECIFICATION

(11) **EP 4 446 163 B1**
(45) Date of publication and mention of the grant of the patent: **30.07.2025**
(21) Application number: 23167971.3
(22) Date of filing: 14.04.2023
(51) Int. Cl.: B60N 2/28

(54) **CHILD VEHICLE SEAT**
FAHRZEUG-KINDERSITZ
SIÈGE DE VÉHICULE POUR ENFANT

(43) Date of publication of application: 16.10.2024
(73) Proprietor: Maxi Miliaan B.V., 5704 RD Helmond (NL)
(72) Inventor: Olfers, Dennis, 5595 AV Leende (NL)
(74) Representative: Veldman-Dijkers, Cornelia G. C.

(56) References cited:
- EP-A1- 0 640 508
- EP-A1- 1 225 087
- US-A1- 2012 013 160

## Description

### FIELD OF THE INVENTION

The invention relates to a child vehicle seat comprising at least a base, a seat comprising a seating portion and a backrest portion and an operating mechanism located at the backrest portion at a side remote of the seating portion, wherein the seating portion and the backrest portion are pivotable with respect to each other as well as movable with respect to the base, which base comprises a number of locking positions in which the backrest portion can be locked with respect to the base, whereby a locking element is movable by means of the operating mechanism from at least a first of said locking positions via an unlocked position to at least a second of said locking positions, whereby the backrest portion as well as the seating portion are being moved from a first sitting position to a second sitting position.

The different sitting positions of the child vehicle seat provide the possibility to adapt the sitting position to the need of the child. Although it is called sitting position, the sitting position can also be more a reclined sleeping position.

### BACKGROUND OF THE INVENTION

By a child vehicle seat known from EP1225087A1, the locking element comprises an engaging pin being translatable in the longitudinal direction of the pin from a position located inside an engaging hole as well as a through hole to a position outside of the holes. The engaging pin is being translated by pulling on a stiff wire. A disadvantage is that the stiff wire must be moved over the same distance as the pin. Another disadvantage is that the pin and the stiff wire must be moved in the same direction. This reduced the freedom of design of the child vehicle seat.

By a second embodiment of EP1225087A1, the locking element comprises a lock lever being pivotable about a pivot shaft extending horizontally and perpendicular to the main axis of the child vehicle seat. The main axis corresponds to the driving direction of the car in which the child vehicle seat will be used. The lock lever is provided with a lock plate receivable in any of a plurality of locating engaging holes. The lock lever is being manually operated by pulling it against spring force against an angle control plate located on the rear of the backrest portion. This has the disadvantage that the lock lever is out of reach when the child vehicle seat in use is located with the backrest portion against the backrest of the vehicle seat. The recline function is often used in rear facing driving direction. With the child seat in the rear facing driving direction the lever can be out of reach when the child seat is located on or close to the upper part of the backrest of the front driver or passenger seat.

### SUMMARY OF THE INVENTION

At least one of the objects of the invention is to provide a child vehicle seat whereby a larger freedom of design is obtained regarding the movement of the locking element.

This object is accomplished with the child vehicle seat according to the invention in that the locking element is pivotable about a pivot axis against spring force by means of a pulling element extending between the operating element and the locking element from the locking positions to the unlocked position, which pivot axis extends at least partially in vertical direction.

By pivoting the locking element, the distance over which the locking element is being moved from a position inside a locking position to the unlocked position and the distance over which the operating element and the pulling element connected thereto must be moved will depend on the distance between the locking positions and the pivot axis as well as the distance between the connection of the pulling element to the locking element and the pivot axis. By amending these distances, a required ratio between the displacement of the locking element with respect to the locking position and the displacement of the operating element can be obtained. The part of the locking element cooperating with the locking positions can be located at an opposite side of the pivot axis as the connection of the pulling element to the locking element or at the same side. In case that the part of the locking element cooperating with the locking positions is located at the opposite side of the pivot axis as the connection of the pulling element to the locking element, movement of the pulling element in one direction will result in movement of the part of the locking element in opposite direction.

During a crash the rotation axis is perpendicular to the crash direction, so unlocking due to inertia of locking elements is unlikely to happen.

Since the pivot axis extends at least partially in vertical direction instead of horizontal axis by the second embodiment of EP1225087A1 again a larger design of freedom regarding the movement of the locking element is obtained.

An embodiment of the child vehicle seat according to the invention is characterized in that the base is provided with a comb-shaped element comprising a number of teeth, whereby each locking position is located between two adjacent teeth.

Such a comb-shaped element can easily be manufactured with a relatively small thickness so that it requires little space. The locking positions are automatically obtained and are located between two adjacent teeth.

Such a comb-shaped element can be positioned in the sides of the child vehicle seat, leaving more space for the child, especially because internal dimensions and external dimensions of the child vehicle seat are regulated in the R129 car seat regulation of the EU.

The teeth can have different shapes, like having a chamfer in one or more positions, offering the possibility to move from one seating position to another seating position without operating the recline handle. This could be convenient for the user to move the backrest from a more reclined seating position to a less reclined seating position.

The teeth can have different shapes, like having a chamfer in one or more positions, offering the possibility to move from a reclined seating position to a more upright seating position. This can have advantages in case of a crash, where a more upright position results in lower injury risk for the child.

Another embodiment of the child vehicle seat according to the invention is characterized in that the teeth are substantially directed to the front side or the rear side of child vehicle seat.

In this manner, the preferable relatively thin comb-shaped element will extend in the main direction of the child vehicle seat. The orientation of the teeth has the advantage that the locking element is located on the front side or rear side of the comb-shaped element. In case of an accident the locking element will be pushed inside the locking position between two adjacent teeth so that a firm connection between the locking element and the comb-shaped element will be maintained.

Another embodiment of the child vehicle seat according to the invention is characterized in that the pulling element comprises a cable, a steel wire, an iron wire, a plastic wire, a rope or a webbing strap.

Such a pulling element can easily be manufactured, is relatively cheap and can be guided, if necessary, along any desired path in the child vehicle seat.

The weight of such pulling element is relatively low, so the inertia of such pulling element will not lead to undesired unlocking of the connection.

The weight of the child vehicle seat will be low which is convenient for the user because this is an infant carrier, and there are restrictions in product weight in the R129 regulation of the EU.

Another embodiment of the child vehicle seat according to the invention is characterized in that on each side the child seat is provided with the same locking positions and locking element.

By having locking positions as well as locking elements on both sides an even firmer connection between the backrest portion and the base is obtained.

Another embodiment of the child vehicle seat according to the invention is characterized in that the operating element comprises a handle being rotatable against spring force about a rotation axis extending horizontally and perpendicular to a main axis of the child vehicle seat, which operating element also comprises two levers, each lever being pivotable about a pivot axis extending perpendicular to the rotation axis, whereby near two opposite ends the handle is provided with cams, each cam cooperates with a first end of one of the levers, whereby a second end of each lever is connected to the pulling element, whilst the pivot axis of the lever is located between the first and second end of lever.

With such an operating element a user needs simply to pivot the handle to operate both levers. The cams will force the first ends of the levers to move, thereby pivoting the levers. When the levers are being pivoted, the second ends of the levers will also be moved, resulting in a movement of the pulling elements connected thereto. After releasing the handle, the handle and the levers will move back under spring force to the initial positions. The spring force can be relatively high to secure the locking element to lock into the comb-shaped element. Due to the position and geometry of the levers, the operating forces for the user can be relatively low. Cams are preferred to maximize the component force asserted on the lever and optimize the contact areas of the handle and lever. The cams can be solely provided on the handle or on the first ends of levers, or can be provided on both handle and the first ends of levers.

Another embodiment of the child vehicle seat according to the invention is characterized in that the operating element comprises a handle being movable against spring force in a direction parallel to a main axis of the child vehicle seat, which operating element also comprises two levers, each lever being pivotable about a pivot axis, whereby two opposite ends of the handle cooperate with first ends of the levers, which first end is provided with a cam, whereby a second end of each lever is connected to the pulling element, whilst the pivot axis of the lever is located between the first and second end of lever.

With such an operating element a user needs simply to push the handle to operate both levers. When the levers are being pivoted, the second ends of the levers will also be moved, resulting in a movement of the pulling elements connected thereto. After releasing the handle the handle and the levers will move back under spring force to the initial positions.

The stroke of the operating element can be relatively small, due to the position and shape of the cams.

### BRIEF DESCRIPTION OF THE DRAWINGS

The child vehicle seat according to the invention will further be explained with reference to the drawings, wherein,
figure 1 is a perspective view of a child vehicle seat according to the invention,
figure 2 is a exploded view of the child vehicle seat as shown in figure 1,
figure 3 is a top view of a part of the child vehicle seat as shown in figure 1, which part comprises the seating portion and the backrest portion,
figure 4 is a perspective view of a first embodiment of the operating element, the pulling elements, the locking elements as well as the locking positions of the child vehicle seat as shown in figure 1,
figure 5 is a perspective view of detail V of the child vehicle seat as shown in figure 2,
figure 6 is a perspective view of detail VI of the child vehicle seat as shown in figure 6,
figures 7A and 7B are enlarged perspective views of detail VII as shown in figure 1, in the locked and unlocked position respectively,
figures 8A and 8B are enlarged perspective views of detail VIII as shown in figure 1, in the locked and unlocked position respectively,
figures 9A and 9B are enlarged perspective views of detail IX as shown in figure 1, in the locked and unlocked position respectively,
figure 10 is a cross section of a child vehicle seat as shown in figure 1 in a first sitting position,
figure 11 is a cross section of a child vehicle seat as shown in figure 1 in a second sitting position,
figure 12A and 12B figures 7A and 7B are enlarged perspective views of detail VII as shown in figure 1 of a second embodiment of the operating element, in the locked and unlocked position respectively.

In the drawings, like reference numerals refer to like elements.

### DESCRIPTION OF PREFERRED EMBODIMENTS

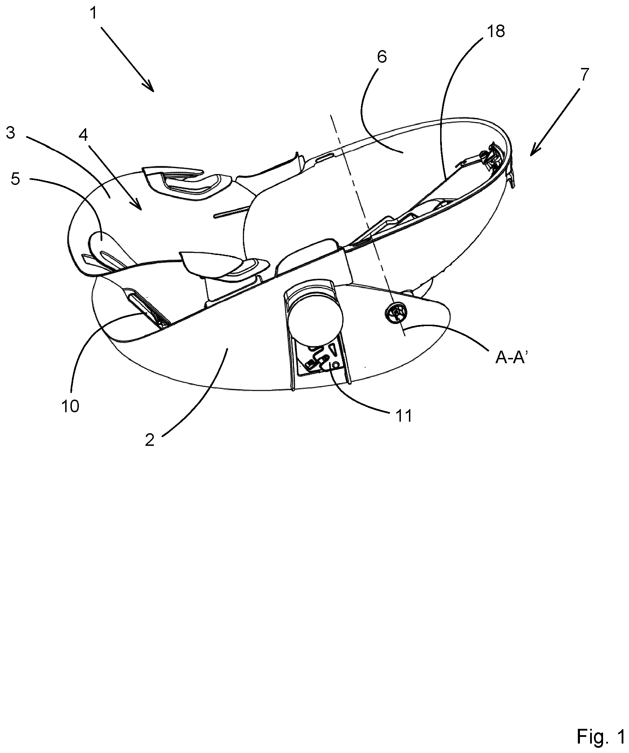

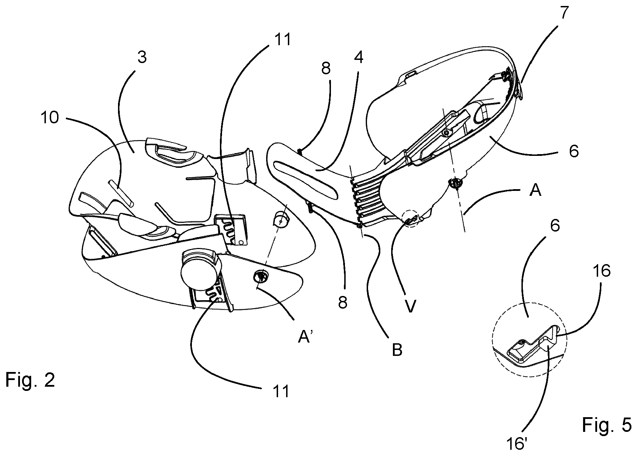

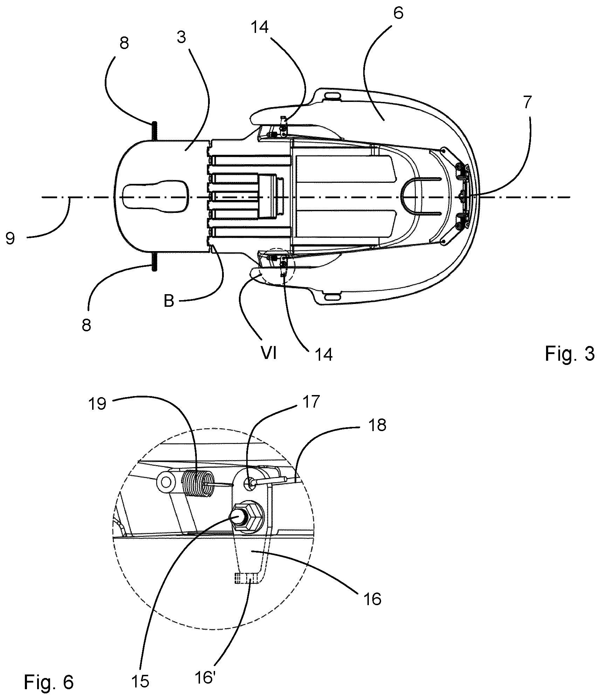

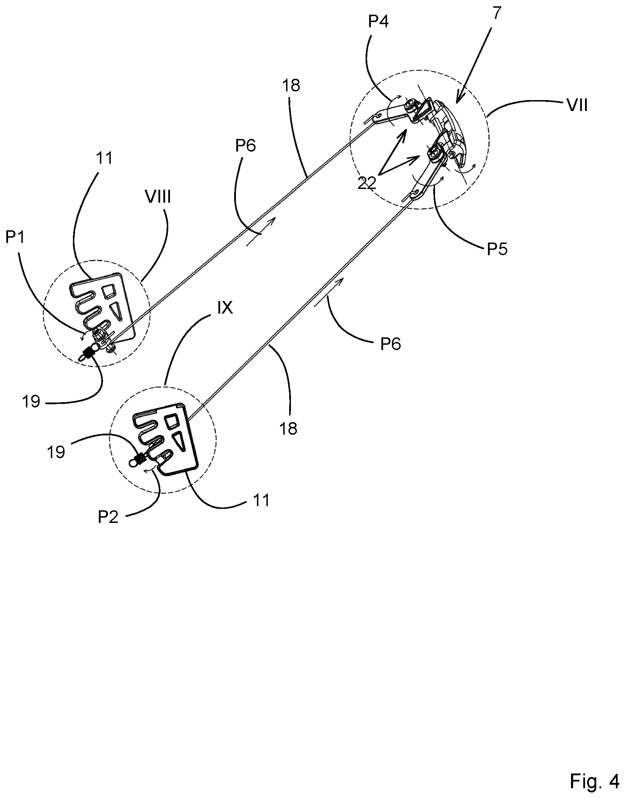

Figures 1-11 show different views of a first embodiment of the child vehicle seat 1 according to the invention. The child vehicle seat 1 comprises a base 2, a shell 3 fixed to the base 2 and a seat 4 located inside the shell 3. The seat 4 comprises a seating portion 5 and a backrest portion 6. The backrest portion 6 is at a side remote of the seating portion 5 provided with an operating mechanism 7. The backrest portion 6 is pivotable about a pivot axis A-A' with respect to the base 2. The seating portion 5 and the backrest portion 6 are pivotable with respect to each other about a pivot axis B. The seating portion 5 is at at a side remote of the backrest portion 6 provided with two pens 8 extending perpendicular to a main axis 9 of the child vehicle seat 1. The pens 8 of the seating portion 5 are slidably located in slots 10 of the shell 3. The slots 10 define the extreme positions of the sitting position and laying down position of the seating portion 5. The base 2 is on both longitudinal sides provided with a comb-shaped element 11 comprising a number of teeth 12, whereby between two adjacent teeth 12 a locking position 13 is located. In the present embodiment the comb-shaped element 11 comprises three locking position 13. If desired only two or more than three locking positions 13 can be provided. The comb-shaped element 11 is plate-shaped, whereby the plate extends in the direction of the main axis 9 as well as substantially in vertical direction. In this manner the teeth are substantially directed to the front side of child vehicle seat 1.

The backrest portion 6 is on both longitudinal sides provided with a locking element 14. The locking element 14 is pivotable about a pivot axis 15 extending parallel to the comb-shaped element 11. A first part 16 of the locking element 14 is provided with a hook 16'. The hook 16' prevents the locking element 14 to disengage from the comb-shaped element 11 by side impact in a crash and prevents the locking element to disengage in case of torsion that can happen in a crash (like with the infant seat is installed with a vehicle belt). This first part 16 is movable in and out of the locking positions 13. A second part 17 of the locking element 14 is located on the opposite side of the pivot axis 15. A pulling element 18 is connected to this second part 17. The pulling element 18 comprises a cable, a steel wire, an iron wire, a plastic wire, a rope or a webbing strap.

Also, a spring 19 is connected to the second part 17 pulling the second part 17 to the front side of the child vehicle seat 1 thereby pivoting the locking element 14 in a direction opposite to the directions indicated by arrows P1, P2 and pushing the first parts 16 into locking positions 13. By this embodiment the pivot axes 15 of both locking elements 14 are located between the two comb-shaped elements 11. It is also possible to locate them both outside of the comb-shaped elements 11 or to locate one between the comb-shaped elements 11 and one outside the comb-shaped elements 11.

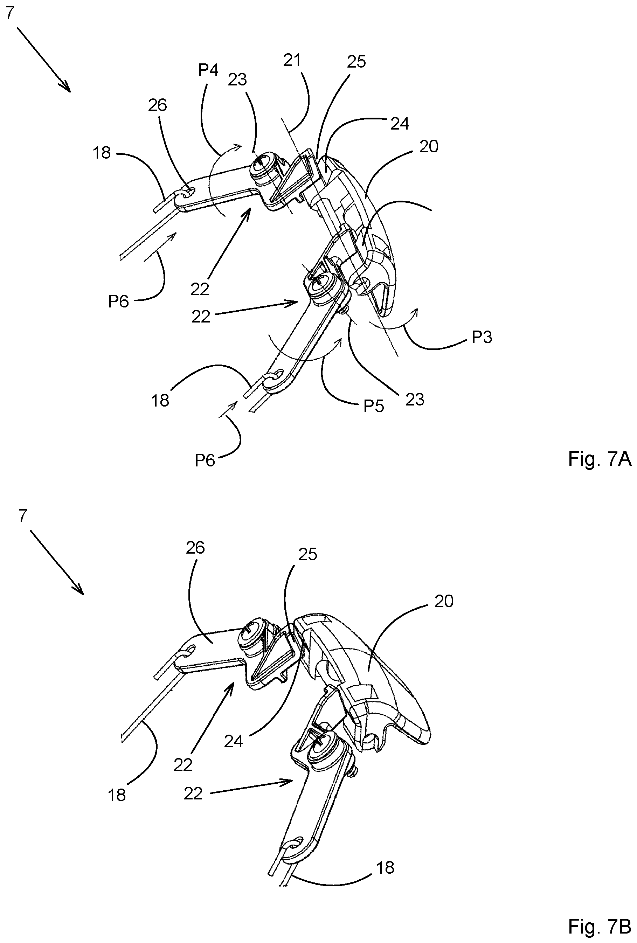

The operating mechanism 7 can best be seen in the figures 7A and 7B. The operating element 7 comprises a handle 20 being rotatable against spring force of springs 19 about a rotation axis 21 extending horizontally and perpendicular to a main axis 9 of the child vehicle seat 1. The operating element 7 also comprises two levers 22, each lever 22 being pivotable about a pivot axis 23 extending perpendicular to the rotation axis 21. The handle 20 is provided near two opposite ends with cams 24. Each cam 24 cooperates with a first end 25 of one of the levers 22. A second end 26 of each lever 22 is connected to the pulling element 18. The pivot axis 23 of the lever 22 is located between the first end 25 and second end 26 of lever 22.

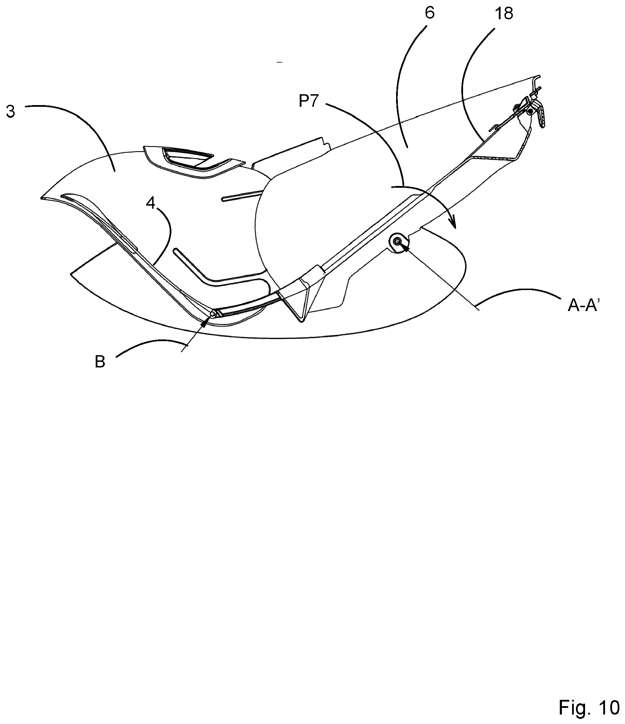

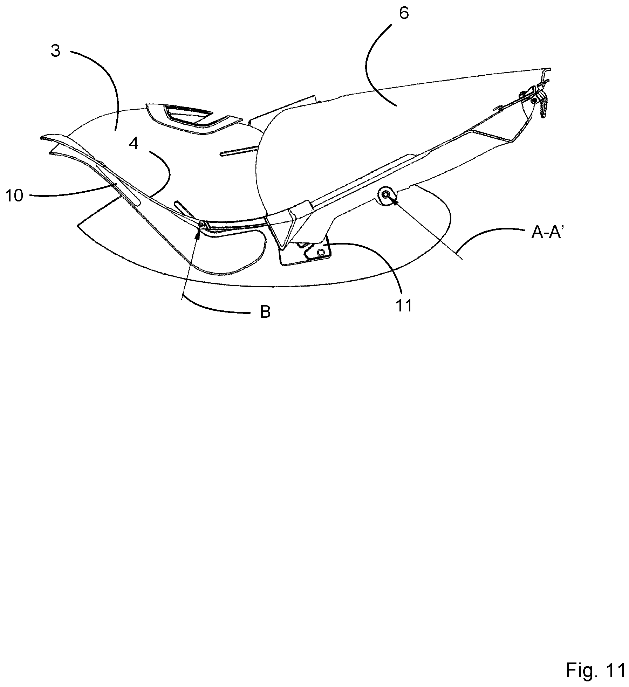

The child vehicle seat 1 can be moved from for example the first sitting position as shown in figure 10 to a second sitting position as shown in figure 11 in the following manner.

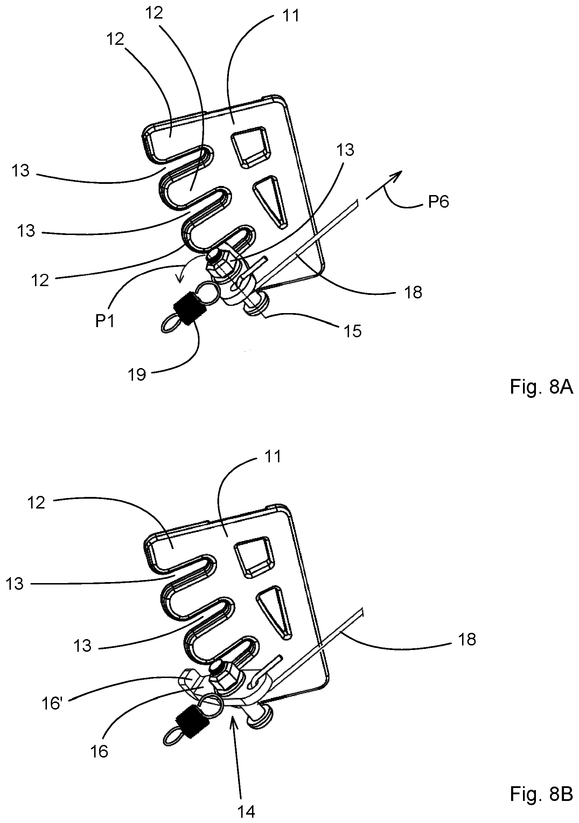

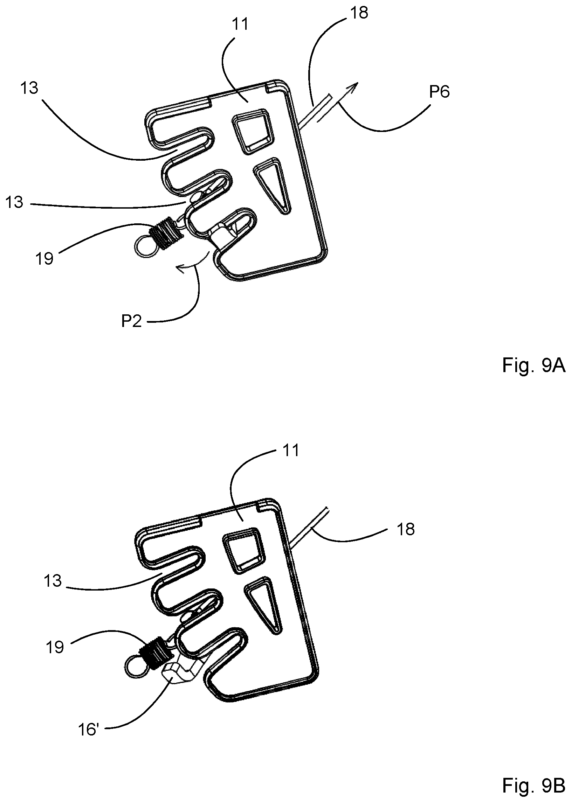

In the first sitting position as shown in figure 10, the first parts 16 of the locking elements 14 are located in the most upper locking positions 11 of the comb-shaped elements 11. When a user wants to change to the second sitting position, the user pivots the handle 20 in a direction as indicated by arrow P3. The cams 35 will be moved along the first ends 25 of the levers 22 and will force the levers 22 to rotated in the directions as indicated by arrows P4, P5, thereby pulling the pulling elements 18 in the direction as indicated by arrow P6. Displacement of the pulling elements 18 in the direction as indicated by arrow P6, will result in pivoting of the locking elements 14 in the directions as indicated by arrows P1, P2, whereby the locking elements 14 will be moved to an unlocked position (figures 8B, 9B). The user can now pivot the backrest portion 6 about pivot axis A-A1, thereby forcing the seating portion 5 to pivot about pivot axis B and to slide with the pens 8 through slots 10 until the second sitting position has been reached. When releasing the handle 20, the locking elements 14 will be forced by springs 19 into another locking position 13.

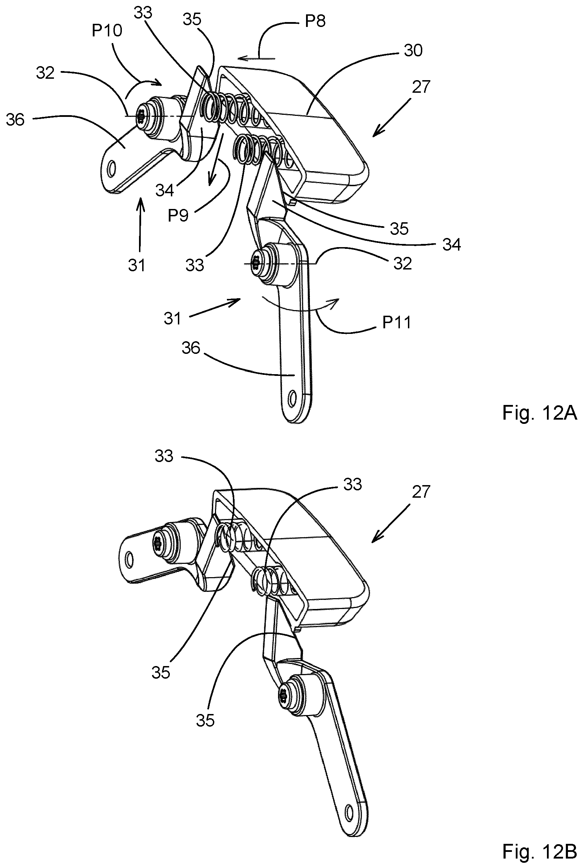

Figures 12A and 12B show a second embodiment of an operating element 27 of a child vehicle seat 1 according to the invention. The operating element 27 comprises a handle 30 being movable against spring force of the springs 19 in a direction indicated by arrow P8 extending parallel to a main axis 9 of the child vehicle seat 1. The operating element 27 also comprises two levers 31, each lever 31 being pivotable about a pivot axis 32 extending parallel to a main axis 9 of the child vehicle seat 1. The handle 30 is near two opposite ends provided with springs 33 resting with one end to the handle 30 and with an opposite second end to a shell (not shown) of the child vehicle seat 1. Each first end 34 is provided with a cam 35 cooperating with the handle 30. A second end 36 of each lever 31 is connected to the pulling element 18. The pivot axis 32 of the lever 31 is located between the first end 34 and second end 36 of the lever 31.

The child vehicle seat 1 comprising operating element 27 can be moved from for example the first sitting position as shown in figure 10 to a second sitting position as shown in figure 11 in the following manner.

In the first sitting position as shown in figure 10, the first parts 16 of the locking elements 14 are located in the most upper locking positions 11 of the comb-shaped elements 11. When a user wants to change to the second sitting position, the user pushes the handle 30 against spring force of the springs 33 in the direction as indicated by arrow P8. The handle 30 is pushed against the cams 35, and will force the cams 35 to move in a direction indicated by arrow P9, thereby forcing the levers 31 to rotated in the directions as indicated by arrows P10, P11. By doing so, the pulling elements 18 will be pulled in the direction as indicated by arrow P6. Displacement of the pulling elements 18 in the direction as indicated by arrow P6, will result in pivoting of the locking elements 14 in the directions as indicated by arrows P1, P2, whereby the locking elements 14 will be moved to an unlocked position (figures 8B, 9B). The user can now pivot the backrest portion 6 about pivot axis A-A1, thereby forcing the seating portion 5 to pivot about pivot axis B and to slide with the pens 8 through slots 10 until the second sitting position has been reached. When releasing the handle 20, the locking elements 14 will be forced by springs 19 into another locking position 13.

It is also possible that the springs 18 can push the handle 30 in the locked position, in which case the springs 33 can be left behind.
It is also possible that the teeth are substantially directed to the rear side of child vehicle seat 1. The locking element is located on the side of the teeth to be able to cooperate with the teeth.

In the shown embodiment the cams 24 are provided on the handle 20. However, the cams also can be provided on the first end 25 of lever 22 solely or both handle 20 and lever 22 are provided with cams respectively, so that the component force asserted on the lever is maximized and the contact areas of the handle 20 and lever 25 are optimized.

It has to be noted that the handle 20, 30, levers 22, 31, pulling element 18 and locking element 14 are interlinked as one mechanism. If one of these elements is moved by or against spring force, the other elements will be moved accordingly. Therefore, at least one of the handles 20, 30, levers 22, 31, and locking elements 14 is directly connected with a spring. The locking elements 14 will be eventually restored at the initial position when releasing the handle 20, 30.

The handle 30 can also be movable in vertical direction. In such a case the cams 35 need to be different to transfer the movement from the handle 30 to the locking element 14.

### LIST OF REFERENCE SIGNS

- 1: child vehicle seat
- 2: base
- 3: shell
- 4: seat
- 5: seating portion
- 6: backrest portion
- 7: operating mechanism
- 8: pen
- 9: main axis
- 10: slot
- 11: comb-shaped element
- 12: teeth
- 13: locking position
- 14: locking element
- 15: pivot axis
- 16': hook
- 16: first part
- 17: second part
- 18: pulling element
- 19: spring
- 20: handle
- 21: rotation axis
- 22: lever
- 23: pivot axis
- 24: cam
- 25: first end
- 26: second end
- 27: operating element
- 30: handle
- 31: lever
- 32: pivot axis
- 33: spring
- 34: first end
- 35: cam
- 36: second end
- A-A1: pivot axis
- B: pivot axis
- P1: arrow
- P2: arrow
- P3: arrow
- P4: arrow
- P5: arrow
- P6: arrow
- P8: arrow
- P9: arrow
- P10: arrow
- P11: arrow

## Claims

1. Child vehicle seat (1) comprising at least a base (2), a seat comprising a seating portion (5) and a backrest portion (6) and an operating mechanism (7) located at the backrest portion (6) at a side remote of the seating portion (5), wherein the seating portion (5) and the backrest portion (6) are pivotable with respect to each other as well as movable with respect to the base (2), which base (2) comprises a number of locking positions (13) in which the backrest portion (6) can be locked with respect to the base (2), whereby a locking element (14) is movable by means of the operating mechanism (7) from at least a first of said locking positions (13) via an unlocked position to at least a second of said locking positions (13), whereby the backrest portion (6) as well as the seating portion (5) are being moved from a first sitting position to a second sitting position, wherein the locking element (14) is pivotable about a pivot axis (15) against spring (19, 33) force **characterized in that** the locking element is pivotable by means of a pulling element (18) extending between the operating element (27) and the locking element (14) from the locking positions (13) to the unlocked position, which pivot axis (15) extends at least partially in vertical direction.

2. Child vehicle seat (1) according to claim 1, **characterized in that** the base (2) is provided with a comb-shaped element (11) comprising a number of teeth (12), whereby each locking position (13) is located between two adjacent teeth.

3. Child vehicle seat (1) according to claim 2, **characterized in that** the teeth (12) are substantially directed to the front side or the rear side of child vehicle seat (1).

4. Child vehicle seat (1) according to claim 1, 2 or 3, **characterized in that** the pulling element (18) comprises a cable, a steel wire, an iron wire, a plastic wire, a rope or a webbing strap.

5. Child vehicle seat (1) according to one of the preceding claims, **characterized in that** on each side the child seat is provided with the same locking positions (13) and locking element (14).

6. Child vehicle seat (1) according to claim 5, **characterized in that** the operating element comprises a handle (20) being rotatable against spring force about a rotation axis (21) extending horizontally and perpendicular to a main axis (9) of the child vehicle seat, which operating element (27) also comprises two levers (22), each lever (22) being pivotable about a pivot axis (23) extending perpendicular to the rotation axis (21), whereby near two opposite ends the handle (20) cooperates with a first end (25) of one of the levers (22), whereby a second end (26) of each lever (22) is connected to the pulling element (18), whilst the pivot axis (23) of the lever (22) is located between the first and second end (26) of lever (22).

7. Child vehicle seat (1) according to claim 6, **characterized in that** the two opposite ends the handle (20) and / or the first ends (25) of levers (22) are provided with cams (24).

8. Child vehicle seat (1) according to claim 5, **characterized in that** the operating element (27) comprises a handle (30) being movable against spring force in a direction parallel to a main axis (9) of the child vehicle seat, which operating element (27) also comprises two levers (31), each lever (31) being pivotable about a pivot axis (32), whereby two opposite ends of the handle (30) cooperate with first ends (34) of the levers (31), which first end (34) is provided with a cam (35) , whereby a second end (36) of each lever (31) is connected to the pulling element (18), whilst the pivot axis (32) of the lever (31) is located between the first and second end (36) of lever (31).

## Patentansprüche

1. Fahrzeug-Kindersitz (1), umfassend mindestens eine Basis (2), einen Sitz, umfassend einen Sitzabschnitt (5) und einen Rückenlehnenabschnitt (6), und einen Betriebsmechanismus (7), der sich am Rückenlehnenabschnitt (6) auf einer vom Sitzabschnitt (5) entfernten Seite befindet, wobei der Sitzabschnitt (5) und der Rückenlehnenabschnitt (6) in Bezug zueinander schwenkbar sowie in Bezug auf die Basis (2) bewegbar sind, wobei die Basis (2) eine Anzahl von Verriegelungspositionen (13) umfasst, in denen der Rückenlehnenabschnitt (6) in Bezug auf die Basis (2) verriegelt werden kann, wobei ein Verriegelungselement (14) mittels des Betriebsmechanismus (7) von mindestens einer ersten der Verriegelungspositionen (13) über eine entriegelte Position in mindestens eine zweite der Verriegelungspositionen (13) bewegbar ist, wobei der Rückenlehnenabschnitt (6) und der Sitzabschnitt (5) von einer ersten Sitzposition in eine zweite Sitzposition bewegt werden,
wobei das Verriegelungselement (14) um eine Schwenkachse (15) gegen die Kraft einer Feder (19, 33) schwenkbar ist, **dadurch gekennzeichnet, dass** das Verriegelungselement mittels eines sich zwischen dem Betriebselement (27) und dem Verriegelungselement (14) erstreckenden Zugelements (18) aus den Verriegelungspositionen (13) in die entriegelte Position schwenkbar ist, wobei sich die Schwenkachse (15) zumindest teilweise in vertikaler Richtung erstreckt.

2. Fahrzeug-Kindersitz (1) nach Anspruch 1, **dadurch gekennzeichnet, dass** die Basis (2) mit einem kammförmigen Element (11), umfassend eine Anzahl von Zähnen (12), versehen ist, wobei sich jede Verriegelungsposition (13) zwischen zwei benachbarten Zähnen befindet.

3. Fahrzeug-Kindersitz (1) nach Anspruch 2, **dadurch gekennzeichnet, dass** die Zähne (12) im Wesentlichen zur Vorderseite oder zur Rückseite des Fahrzeug-Kindersitzes (1) gerichtet sind.

4. Fahrzeug-Kindersitz (1) nach Anspruch 1, 2 oder 3, **dadurch gekennzeichnet, dass** das Zugelement (18) ein Seil, einen Stahldraht, einen Eisendraht, ein Kunststoffdraht, eine Leine oder ein Gewebeband umfasst.

5. Fahrzeug-Kindersitz (1) nach einem der vorhergehenden Ansprüche, **dadurch gekennzeichnet, dass** der Kindersitz auf jeder Seite mit den gleichen Verriegelungspositionen (13) und dem Verriegelungselement (14) versehen ist.

6. Fahrzeug-Kindersitz (1) nach Anspruch 5, **dadurch gekennzeichnet, dass** das Betriebselement einen Griff (20) umfasst, der gegen Federkraft um eine sich horizontal und senkrecht zu einer Hauptachse (9) des Fahrzeug-Kindersitzes erstreckende Drehachse (21) drehbar ist, wobei das Betriebselement (27) auch zwei Hebel (22) umfasst, wobei jeder Hebel (22) um eine sich senkrecht zur Drehachse (21) erstreckende Schwenkachse (23) schwenkbar ist, wobei der Griff (20) nahe zwei entgegengesetzten Enden mit einem ersten Ende (25) eines der Hebel (22) zusammenwirkt, wobei ein zweites Ende (26) jedes Hebels (22) mit dem Zugelement (18) verbunden ist, während sich die Schwenkachse (23) des Hebels (22) zwischen dem ersten und zweiten Ende (26) des Hebels (22) befindet.

7. Fahrzeug-Kindersitz (1) nach Anspruch 6, **dadurch gekennzeichnet, dass** die zwei entgegengesetzten Enden des Griffs (20) und/oder die ersten Enden (25) der Hebel (22) mit Nocken (24) versehen sind.

8. Fahrzeug-Kindersitz (1) nach Anspruch 5, **dadurch gekennzeichnet, dass** das Betriebselement (27) einen Griff (30) umfasst, der gegen Federkraft in einer Richtung parallel zu einer Hauptachse (9) des Fahrzeug-Kindersitzes bewegbar ist, wobei das Betriebselement (27) auch zwei Hebel (31) umfasst, wobei jeder Hebel (31) um eine Schwenkachse (32) schwenkbar ist, wobei zwei entgegensetzte Enden des Griffs (30) mit ersten Enden (34) der Hebel (31) zusammenwirken, wobei das erste Ende (34) mit einem Nocken (35) versehen ist, wobei ein zweites Ende (36) jedes Hebels (31) mit dem Zugelement (18) verbunden ist, während sich die Schwenkachse (32) des Hebels (31) zwischen dem ersten und zweiten Ende (36) des Hebels (31) befindet.

## Revendications

1. Siège de véhicule pour enfant (1) comprenant au moins une base (2), un siège comprenant une partie assise (5) et une partie dossier (6) et un mécanisme d'actionnement (7) situé au niveau de la partie dossier (6) à une distance latérale de la partie assise (5), dans lequel la partie assise (5) et la partie dossier (6) sont pivotantes l'une par rapport à l'autre ainsi que mobiles par rapport à la base (2), ladite base (2) comprenant un nombre de positions de verrouillage (13) dans lesquelles la partie dossier (6) peut être verrouillée par rapport à la base (2), moyennant quoi un élément de verrouillage (14) est mobile au moyen du mécanisme d'actionnement (7) d'au moins une première desdites positions de verrouillage (13) par l'intermédiaire d'une position déverrouillée à au moins une seconde desdites positions de verrouillage (13), moyennant quoi la partie dossier (6) ainsi que la partie assise (5) sont déplacées d'une première position assise à une seconde position assise, dans lequel :
l'élément de verrouillage (14) est pivotant autour d'un axe de pivotement (15) contre une force de ressort (19, 33) **caractérisé en ce que** l'élément de verrouillage est pivotant au moyen d'un élément de traction (18) s'étendant entre l'élément d'actionnement (27) et l'élément de verrouillage (14) des positions de verrouillage (13) à la position déverrouillée, ledit axe de pivotement (15) s'étendant au moins partiellement dans la direction verticale.

2. Siège de véhicule pour enfant (1) selon la revendication 1, **caractérisé en ce que** la base (2) est dotée d'un élément en forme de peigne (11) comprenant un nombre de dents (12), chaque position de verrouillage (13) étant située entre deux dents adjacentes.

3. Siège de véhicule pour enfant (1) selon la revendication 2, **caractérisé en ce que** les dents (12) sont sensiblement dirigées vers le côté avant ou le côté arrière du siège de véhicule pour enfant (1).

4. Siège de véhicule pour enfant (1) selon la revendication 1, 2 ou 3, **caractérisé en ce que** l'élément de traction (18) comprend un câble, un fil d'acier, un fil de fer, un fil de plastique, un cordon ou une sangle.

5. Siège de véhicule pour enfant (1) selon l'une des revendications précédentes, **caractérisé en ce que** de chaque côté le siège pour enfant est doté des mêmes positions de verrouillage (13) et du même élément de verrouillage (14).

6. Siège de véhicule pour enfant (1) selon la revendication 5, **caractérisé en ce que** l'élément d'actionnement comprend une poignée (20) pouvant être tournée contre une force de ressort autour d'un axe de rotation (21) s'étendant horizontalement et perpendiculairement à un axe principal (9) du siège de véhicule pour enfant, cet élément d'actionnement (27) comprenant également deux leviers (22), chaque levier (22) étant pivotant autour d'un axe de pivotement (23) s'étendant perpendiculairement à l'axe de rotation (21), moyennant quoi la poignée (20) à proximité de deux extrémités opposées coopère avec une première extrémité (25) de l'un des leviers (22), une seconde extrémité (26) de chaque levier (22) étant reliée à l'élément de traction (18), tandis que l'axe de pivotement (23) du levier (22) est situé entre la première et la seconde extrémité (26) du levier (22).

7. Siège pour enfant (1) selon la revendication 6, **caractérisé en ce que** les deux extrémités opposées de la poignée (20) et/ou les premières extrémités (25) de leviers (22) sont dotées de cames (24).

8. Siège de véhicule pour enfant (1) selon la revendication 5, **caractérisé en ce que** l'élément d'actionnement (27) comprend une poignée (30) qui est mobile contre une force de ressort dans une direction parallèle à un axe principal (9) du siège de véhicule pour enfant, ledit élément d'actionnement (27) comprenant également deux leviers (31), chaque levier (31) étant pivotant autour d'un axe de pivotement (32), moyennant quoi deux extrémités opposées de la poignée (30) coopèrent avec des premières extrémités (34) des leviers (31), la première extrémité (34) étant dotée d'une came (35), moyennant quoi une seconde extrémité (36) de chaque levier (31) est reliée à l'élément de traction (18), tandis que l'axe de pivotement (32) du levier (31) est situé entre la première et la seconde extrémité (36) du levier (31).
